Europäisches Patentamt

(19) European Patent Office

Office européen des brevets

(11) EP 0 709 756 A1

# (12) EUROPEAN PATENT APPLICATION

(43) Date of publication:
01.05.1996 Bulletin 1996/18

(51) Int. Cl.⁶: G05B 19/042

(21) Application number: 95116977.0

(22) Date of filing: 27.10.1995

(84) Designated Contracting States:
DE FR GB IT

(30) Priority: 17.01.1995 US 373360
28.10.1994 US 330460

(71) Applicant: Hewlett-Packard Company
Palo Alto, California 94304 (US)

(72) Inventors:
• Segal, Gilbert
Hockessin, DE 19707 (US)
• Blumberg, Leonid M.
Hockessin, DE 19707 (US)
• Gajdos, Lawrence John
Chadds-Ford, PA 19317 (US)
• Snyder, Warren Dale
West Chester, PA 19380 (US)
• Wurm, Christopher M.
Landenberg, PA 19350 (US)
• Jupiter, Shirley C.
Vienne, VA 22180 (US)

(74) Representative: Schoppe, Fritz, Dipl.-Ing.
Patentanwalt,
Georg-Kalb-Strasse 9
D-82049 Pullach (DE)

(54) **Process and apparatus for controlling an instrument in accordance with an instrument method**

(57) The invention is a user interface to one or more instruments (410) which operate in accordance with a derived Method including predetermined setpoint values, derived setpoint values and method variables. Assumptions about the method are made such that predetermined setpoint values can be identified. A plurality of equations related to instrument operation are stored such that derived setpoint values can be generated based on user inputs. A software application program (431; 531) associated with the user interface comprises a plurality of screen displays (425; 422) for requesting the user inputs. A computer (426, 428; 526, 528) executing the application program (431; 531) controls the instrument (410) to run in accordance with the derived Method.

FIG. 4

Printed by Rank Xerox (UK) Business Services
2.11.3/3.4

**Description**

I. BACKGROUND OF THE INVENTION

A. Field of the Invention

The present invention relates to instrument control systems, and more particularly, to a user interface for controlling an instrument to run in accordance with a derived Method.

B. The Prior Art

As technology advances, it becomes easier to add functionality to instrumentation. Unfortunately, adding functionality typically makes instrumentation more complicated and difficult to use. At the same time, the level of expertise of the average user of the instrument is going down. Many types of instruments operate in accordance with a complicated set of instructions known as a Method which has many variables and setpoints which must be set to a specific value (for example, the temperature of a gas chromatograph oven in a chromatographic Method). A series of setpoint values describes how the instrument will operate over the period in which the instrument runs.

Most instrumentation capable of operating in accordance with a method includes an instrument controller comprising an on-board computer including a processor, memory and some form of user interface. The user interface may be as simple as a keypad and multiline display or as sophisticated as a personal computer (PC) having a keypad and a monitor with the ability to illustrate instrument operation. Such instruments typically require an application program executing on the computer to control the instrument to operate in accordance with a Method. Prior to instrument operation, setpoint values related to each instrument step must be inputted into the application program. Setpoint values are typically identified by review of existing Methods and through a "trial and error" approach based on actual instrument operation.

Software programs have been written to simulate instrument operations to assist in identifying setpoint values which can then be manually entered into the instrument controller. PC based instrument controllers having large memories and advanced user interfaces have been employed for making it easier to input such setpoint values. Although assistance in ascertaining and inputting setpoint values make instrument operation easier, it is still very difficult to set up and run an instrument according to a complicated Method. Since setpoint values are typically dependent upon each other, modification of just one setpoint value may require re-calculation and the re-input of many setpoint values. Thus, there is a need for an instrument control system which is easy to use and which provides the flexibility required to modify existing Methods.

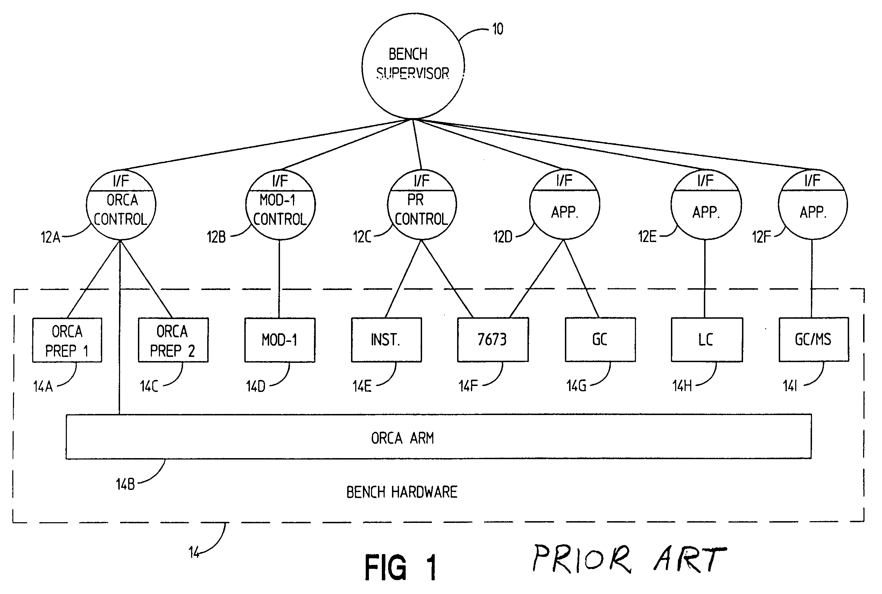

FIG. 1 illustrates a PC based instrument controller having a large memory and advanced user interface which requires the calculation and manual entry of setpoint values. The instrument controller provides a user interface to a laboratory bench including various hardware instruments represented by rectangular boxes and software elements represented by circles for preparation and analysis of a sample in accordance with a Method. The analytical system comprises a Bench Supervisor 10, which will run Methods from instrument application programs, such as the Hewlett-Packard HP7686 Sample Prep Station and a Hewlett-Packard HP3365 Gas Chromatograph Chem Station manufactured and sold by the Hewlett-Packard Company of Palo Alto, California. A Bench Supervisor 10 communicates with a number of instrument applications (i.e., software application programs) 12A, 12B, 12C, ... 12F, which applications directly interface with and control the operations of the instruments comprising the bench hardware 14. The bench hardware 14 may include a number of instruments such a solid phase extraction apparatus 14A, a gas chromatograph (GC) 14G, liquid chromatograph (LC) 14H or mass spectrometer detector (GC/MS) 14I. In general, the bench hardware 14 includes a variety of instruments which may be categorized as preparation instruments, analytical instruments, or transport instruments. Preparation instruments perform some transformation such as combining, mixing and heating. Analytical instruments perform some type of quantitative or qualitative measurement of a chemical substance.

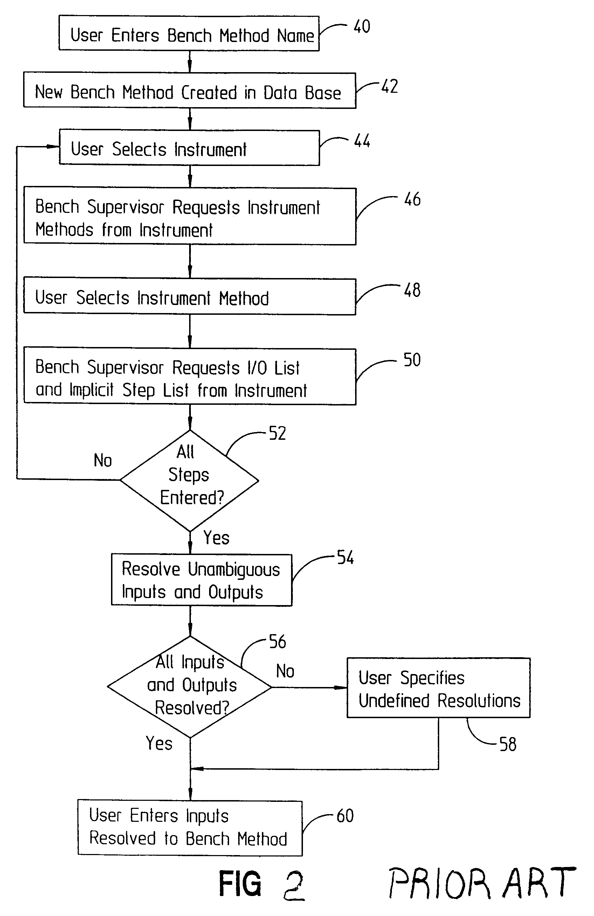

Figure 2 illustrates a flow chart of a Bench Method preparation program in which a large amount of information must be input by the user. At block 40, the user enters the Bench Method name. At block 42, a new Bench Method is created in the data base. At block 44, the user selects an instrument to be used in the Bench Method. At block 46, the Bench Supervisor system ascertains (requests) information from the selected instrument regarding the instrument Methods available from the selected instrument. At block 48, the user selects an instrument Method to be employed in the Bench Method. At block 50, the Bench Supervisor system requests an input/output list and an implicit steps list from the selected instrument. At block 52, a determination is made whether all instrument steps have been entered. If not, the program branches to block 44; if so, the program proceeds to block 54. At block 54, all unambiguous inputs and outputs are resolved. At block 56, a determination is made whether all inputs and outputs have been resolved; if not, the program branches to block 58; if so, the program proceeds to block 60. At block 58, the user specifies all undefined resolutions. At block 60, the user enters inputs resolved to the Bench Method.

Unfortunately, the manual input of all the foregoing inputs into the system has heretofore been very difficult and required expert knowledge of the system. In particular, a user must understand the manual Method being automated, understand the order in which samples will be processed by the system, understand the distinctions between instrument Methods, Bench Methods and bench sequences (including how to modify analytical software to setup any of these), understand terminology used in the software, and finally, how to efficiently set up a manual Method as an automated sequence.

## II. SUMMARY OF THE INVENTION

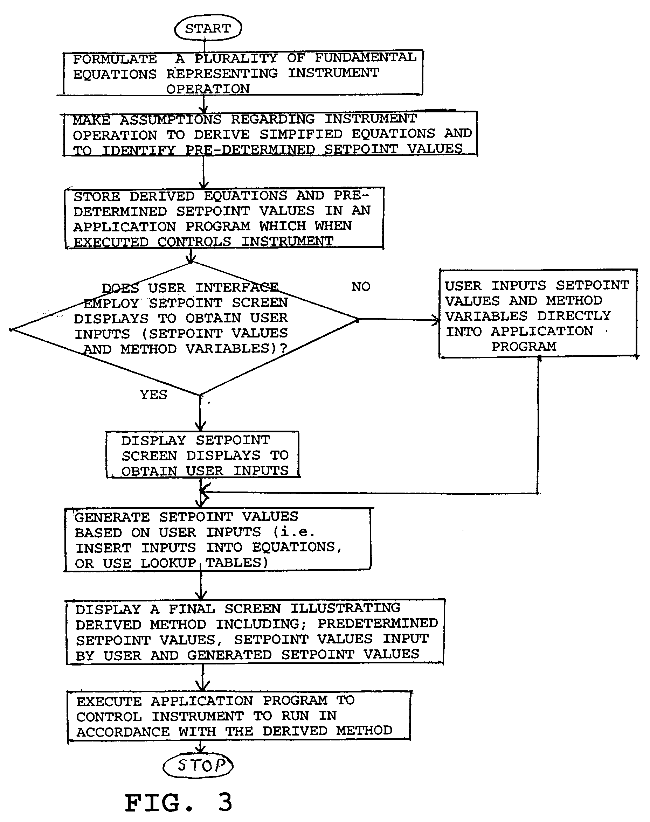

The invention is a user interface to one or more instruments controlled by a computer to operate in accordance with a derived Method which includes predetermined setpoint values, setpoint values input by the user and generated setpoint values based on Method variables input by the user. As set forth in the flow chart illustrated in FIG. 3, assumptions regarding instrument operation as well as the predetermined setpoint values are made such that fundamental equations related to the operation of the instrument can be derived into a simplified form (thus, limiting the amount of user inputs required to prepare a derived Method). The computer stores the derived equations and generates setpoint values based on the user inputs. A software application program associated with the user interface is preprogrammed with the predetermined setpoint values and the equations.

Information regarding the Method, including setpoint values and Method variables are input by the user. The application program may include a number of Method setpoint screen displays to request and obtain such user inputs. Setpoint values input by the user are automatically inserted into the application program. User inputs of Method variables and the stored equations are employed for generating setpoint values. A look-up table may also be employed to determine a corresponding setpoint value. A final screen display may be employed for illustrating the derived Method including predetermined setpoint values, setpoint values input by the user and computer generated setpoint values. A computer executing the application program controls the instrument to run in accordance with the derived Method.

Any type of instrument which operates in accordance with a Method may advantageously employ this invention to make it easy for users to set up and operate the instrument. Additionally, the invention makes it easy to modify an existing Method as new derived setpoint values related to user inputs are automatically generated and input into the application program.

## III. BRIEF DESCRIPTION OF THE DRAWINGS

FIG. 1 is a block diagram showing a prior art Bench Supervisor system coupled to analytical instruments.

FIG. 2 is a flow chart illustrating the Prior Art Method for loading instrument specific information.

FIG. 3 is a flow chart illustrating the invention.

FIG. 4 is a plan view of the invention embodied in a PC based gas chromatograph.

FIG. 5 is a plan view of the invention embodied in a standalone gas chromatograph having an on-board computer coupled to an integrator for displaying the gas chromatographic output.

FIG. 6A-D are screen displays employed for requesting the user input of setpoint values relating to a derived Method which operates a gas chromatograph.

FIG. 7 is a screen display illustrating the derived Method created using the preferred embodiment of the invention.

FIG. 8 is a screen display illustrating another preferred embodiment of the invention employed for requesting the input of setpoint values relating to a derived Method which operates a sample preparation instrument.

FIG. 9 is a screen display illustrating the derived sample preparation Method created using the preferred embodiment of the invention.

## IV. DETAILED DESCRIPTION OF THE PREFERRED EMBODIMENT

### A. Gas Chromatograph (general operation)

#### 1. GC System Overview

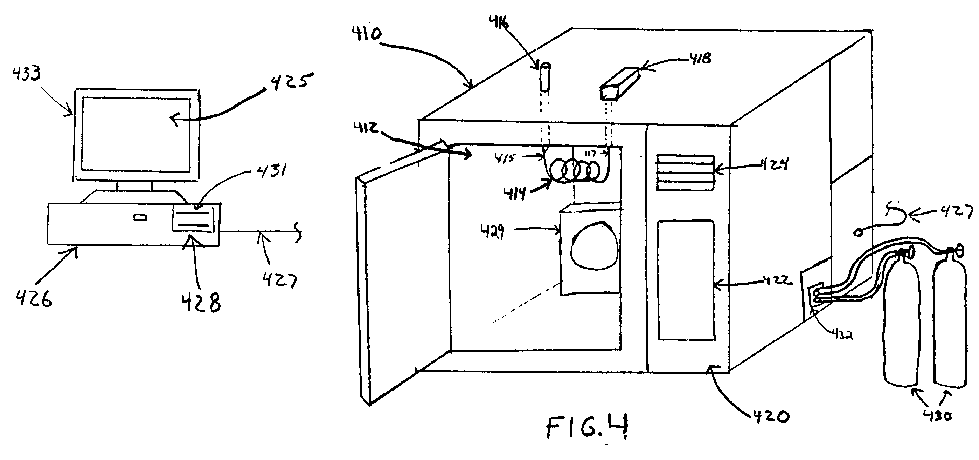

Figure 4 illustrates a gas chromatograph 410 having an oven 412 for housing a chromatographic column 414 which in accordance to a programmed Method, performs chromatographic separations on samples injected into injection port 416 and output to detector 418. The column 414 includes an inlet 415 coupled to the injection port 416 and an outlet 417 coupled to the detector 418. A control panel 420 includes a keyboard 422 and display 424 for interfacing through cable 428 to an external computer 426 having memory 428. Equations relating to instrument operation are derived (see section B. below) and incorporated into a software application program 431 associated with the user interface and stored in the memory 428. The user interface, represented by screen displays 425 on the monitor 433 provides for input by the user of instrument setup variables and column parameters into the application program 431. When the application program is executed, the equations are employed for generating setpoint values based on the user inputs such that the instrument operates in accordance with the chromatographic Method. For example, the computer 426 may send commands to the heater 429 to regulate the temperature within the oven 412, or send commands to control valves 432 to adjust gas pressures of different types of gases being delivered from gas supplies 430 to the injection port 416 and detector 418.

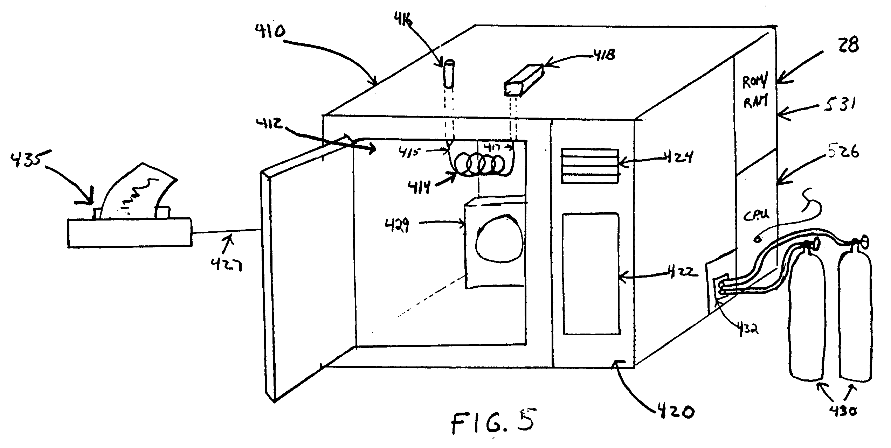

Figure 5 illustrates a second embodiment in which the gas chromatograph 410 is set up as a standalone instrument having an on-board microprocessor 526, memory 528, multi-line display 424 and a keypad 422. An application program 531 stored in the memory 528 includes derived equations and pre-determined setpoint values and requests, through the multi-line display 422, a series of user inputs relating to instrument setup variables and column parameters. The user inputs are entered into the memory 528 through the keypad 422. Upon execution of the application program on the microprocessor 526, equations incorporated into the application program generate setpoint values based upon the user inputs. The application program then ensures that the gas chromatograph 410 operates in accordance with the generated setpoint values such that chromatographic results are displayed on integrator 435.

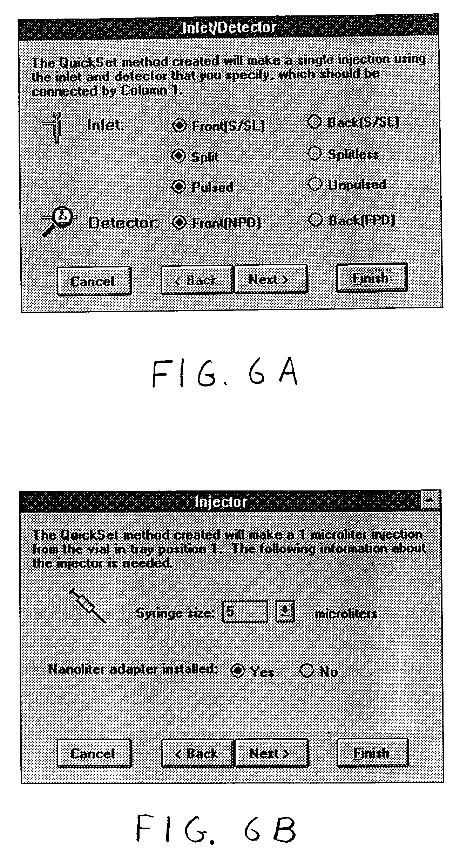

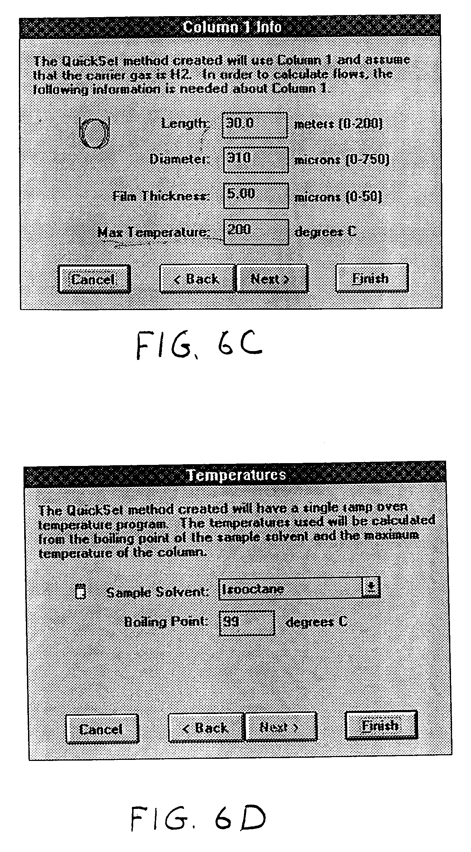

FIG. 6A-D are a set of screen displays 425 utilized in the first embodiment set forth in FIG. 4 and are employed for obtaining user input relating to instrument setup variables (Inlet/Detector setup, Injector setup) and column variables (Column parameters, Operating parameters). In particular, FIG. 6A entitled "Inlet/Detector", informs the user that the derived Method created will make a single injection using the inlet and detector as specified by the user on the screen display as follows: Inlet - Front or Back; Inlet type - Split or Splitless; Inlet Mode- Pulsed or Unpulsed; Detector location - Front (NPD) or Back (FPD). In FIG. 6B, entitled "Injector" the user is informed that the derived Method created will make a 1 microliter injection, however, the user must indicate the syringe size in microliters and whether the nanoliter adapter is installed. In FIG. 6C, entitled "Column 1 Info", the user is informed that the derived Method will use Column 1 and that the carrier gas is $H_2$. In order to calculate flows (as more fully described in section B below), the user is requested to insert Column Diameter. The final setpoint input screen 6D is entitled "Temperatures" and informs the user that the standard Method created will have a single ramp oven temperature program. The temperatures used will be calculated from the maximum temperature of the column as set forth in section B below. The user is requested to use an arrow key to search for and bring up the correct solvent and associated boiling point on the screen display. Alternatively, the user may select "Other" and enter the sample solvent type and its boiling point directly.

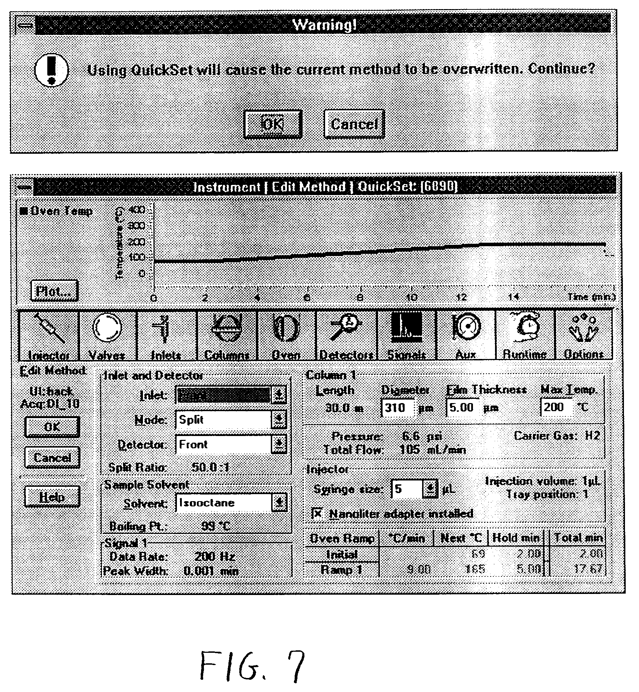

FIG. 7 is the final screen display and illustrates the derived Method corresponding to the predetermined setpoint values and setpoint values generated from user inputs of column parameters and instrument setup variables. Executing the application on the computer causes the instrument to operate in accordance with the derived Method.

## B. Derivation of Chromatographic Method

A series of equations which represent flow through the chromatographic column is employed for deriving the chromatographic Method. These equations relate to Optimum Column Flow, Default Oven Temperature and Initial Peak Width/Data Rate and are based on setpoint values, instrument setup variables and column variables. These equations are simplified by making a large number of assumptions regarding the operation of the gas chromatograph such that most setpoint values can be pre-determined (pre-determined setpoint values) and pre-programmed into the application program. Thus, the user must only input a minimum number of setpoint values (i.e. user-identified setpoint values), instrument setup variables and column variables such that the computer can derive setpoint values corresponding to a derived Method. Execution of the application program, including the derived setpoint values, controls the instrument to operate in accordance with the derived Method. Additionally, upon modification of individual setpoints to improve instrument results, the application program will automatically calculate all related setpoints and reconfigure the instrument to operate in accordance with the modified Method.

### 1. Default Column Flow

Optimization of a gas chromatograph operation is achieved when the column carrier gas flow minimizes column plate height. In general, optimum carrier gas flow is calculated from the optimum carrier gas linear velocity. However, it is difficult to calculate carrier gas flow if the inlet column pressure is much higher than the outlet pressure. Optimum Column flow may also be calculated from the optimum outlet linear velocity. This technique will provide the correct result unless the outlet is at a vacuum pressure (i.e. when a mass spectrometry detector is coupled to the outlet).

The application program which controls the gas chromatograph is programmed with a column optimization equation which directly expresses plate height via column flow at a fixed pressure and temperature (thus, eliminating the requirement to deal with infinities). Once column parameters and instrument setup variables are input into the application program, the optimum column flow is directly calculated and entered as a generated setpoint value. The optimum column flow equation utilized in the invention depends on the carrier gas and column diameter as follows:

$$column\ flow = \frac{carrier\ dependent\ factors}{column\ diameter}$$

The equation is simplified by making the assumption that most dependencies which are less direct and less significant than the carrier dependent factors and column diameter can be ignored. Flow calculations are made at *normal pressure*, $P_{norm}$, and *normal temperature*, $T_{norm}$:

$$P_{norm} = 1 \text{ atm}, \; T_{norm} = 25°C$$

Helium is chosen as a reference carrier gas for other carrier gases. Thus, the Helium *default column flow* is calculated first, and then the default flows for other carriers are re-scaled from the Helium flow. The scaling factors for different carriers (see below) are kept as independent constants to facilitate a proper fine tuning of the flow parameters. The *nominal* flows are chosen as the default column flows. For Helium, the nominal column flow, $f_{He, nom}$, is

$$f_{He, nom} = 2 \, \pi \, d_c \, D_{He, norm}$$

where $D_{He, norm}$ is *diffusion coefficient* for Helium at normal pressure and temperature. The value $f_{He, nom}$ is the *optimum* flow in a thin film capillary column for a solute which has a diffusion coefficient $D_{He, norm}$ and *capacity ratio* $k = 0.5$. Although the value $f_{He, nom}$ can be determined directly without introducing the diffusion coefficient, expressing $f_{He, nom}$ in terms of the diffusion coefficient provides for the use of this term in other calculations within the system. The values for $D_{He, norm}$ should be set to equal 0.212207 cm$^2$ / s to make sure that after multiplication by $\pi$ a round number is obtained. Thus, the equation for optimum flow can be rewritten as:

$$f_{He, nom} \text{ [ml/min]} = 0.012 \, \pi \, d_c[\mu] \, D_{He, norm}[\text{cm}^2 \text{ / s}].$$

With the nominal Helium flow known, the nominal Hydrogen and Nitrogen flows can be found as

$$f_{H2, nom} = 1.25 \, f_{He, nom}$$

$$f_{N2, nom} = 0.3125 \, f_{He, nom}$$

These equations mean that the column flow scaling factors for Helium, Hydrogen and Nitrogen are chosen as follows:

Table 1

| Relative column flow scale factors | | |
|---|---|---|
| Helium | Hydrogen | Nitrogen |
| 1 | 1.25 | 0.3125 |

Again, the default flows for Hydrogen and Nitrogen are the same as their nominal flows. Check points for the default flow in a 100 $\mu$ column are compiled in the table below.

TABLE 2

| DEFAULT COLUMN FLOW, ml/min at 1 atm & 25°C, FOR A 100 $\mu$ COLUMN | | |
|---|---|---|
| Helium | Hydrogen | Nitrogen |
| 0.80000 | 1.00000 | 0.250000 |

2.DEFAULT OVEN TEMPERATURE PROGRAM

The initial time, temperature ramp rate and final time in the temperature program is based on 10°C per hold-uptime. The scaling factor can be different for different sample mixtures and may depend upon the relative priority between speed of analysis and resolution. However, the scaling factor must remain constant for all column diameters, column lengths, phase ratios, carrier gas flows and column pressures. Assumptions regarding the default values

$T_{init}$*initial temperature*
$t_{init}$*initial time*
$R_T$*temperature ramp rate*

$T_{fin}$*final temperature*

$t_{fin}$*final time*

for the default *single ramp oven temperature program* can be selected as:

$$initial\ temperature = 50°C$$

$$initial\ time = (initial\ time\ factor)\ (hold\text{-}up\ time) + (purge\ time\ factor)\ (purge\ time)$$

$$temperature\ ramp = \frac{ramp\ fa}{holdup}$$

$$final\ temperature = maximum\ column\ temperature\ \text{-}\ column\ temperature\ margin$$

$$final\ time = (final\ time\ factor)\ (hold\text{-}up\ time)$$

The following parameters are entered in the setpoint value screens, or assumed to be known from the system (in a preferred embodiment, instrument setup variables are automatically communicated to the computer for input into the application program):

$L$column length[entered]

$T_{col,max}$maximum column temperature[entered]

$\overline{u_\varsigma}$average velocity, $\overline{u_\varsigma}$, of carrier gas[system]

$t_{purge}$purge time (non-zero for splitless injection) [system]

With the known $L$ and $\overline{u_\varsigma}$, the *hold-up time*, $t_0$, can be found as

$$t_0 = L\ /\ \overline{u_\varsigma}.$$

The aforementioned conceptual relations can be rewritten in more specific form:

$$T_{init} = 50\ °C$$

$$t_{init} = 1.2\ t_0 + 2\ t_{purge}$$

$$R_T = 10\ °C\ /\ t_0$$

$$t_{fin} = 3\ t_0$$

$$T_{fin} = T_{col,max} - 25\ °C$$

This constitutes the following selection of the default constants and scaling factors:

TABLE 3

| CONSTANTS AND SCALING FACTORS FOR THE DEFAULT OVEN TEMPERATURE PROGRAM | | | | | |
|---|---|---|---|---|---|
| *Initial tempera ture* | *initial time factor* | *purge time factor* | *ramp factor* | *column temperature margin* | *final time factor* |
| 50 °C | 1.2 | 2 | 10 °C | 25 °C | 3 |

With the exception of the ramp factor, all these parameters are arbitrary values. For hydrocarbons, the temperature difference required for the 2-fold change in retentivity is somewhere in the vicinity of 25 °C depending on the stationary phase, column temperature, etc. While a reference *characteristic* temperature ramp rate of 25 °C per hold-up time is usually employed, the preferred embodiment of the invention utilizes a conservative ramping of 10 °C per hold-up time and all other rates are compared with it.

EXAMPLE. User supplied data:

| column: | 30m × 530μ |
| carrier gas: | Hydrogen |
| maximum column temperature: | 325 °C |

Default parameters available from other parts of the system:

| average gas velocity (approx.): | 40 cm/s (at default flow rate of 5.3 normal l/min). |
| hold-up time: | 30 m / (40 cm/s) = 75 s = 1.25 min |

```
Temperature program parameters (calculated in this screen):

        initial temperature:                        50 'C

        initial time:      1.2 × 1.25 min       1.5 min

        ramp rate:         10 'C / 1.25 min

8 'C / min

        final temperature                           300 'C

        final time         3 × 1.25 min         3.75 min
```

3. Initial Peak Width/Data Rate

The calculation of peak width and data rate requires the calculation of plate height. As previously discussed, plate height calculations typically result in the related problems of incorrect utilization of average carrier gas velocity, and the possibility of infinite outlet gas velocity (i.e. mass spectrometer coupled to outlet of GC). Since the invention calculates plate height directly from carrier gas flow in the column, these problems are averted.

The *Initial peak width* is the source for calculation of *the data sampling rate*, or, briefly, *data rate*. For the *thin film* columns, when peaks are *Gaussian*, and *average velocity* of carrier gas and its *flow rate* are known, the peak width for the calculation of the data rate can be found as

$$w = \frac{1}{u}\sqrt{L\left((\pi d_c(1+k))^2\frac{D}{f}+\frac{1+6k+11k^2}{12}\frac{f}{D}\right)}$$

where

    *w* - *peak width* (*area/height*, as reported by integrators)
    $^u$ *average* carrier gas *velocity*
    *L* column length
    $d_c$.
    column diameter
    *k* capacity factor of a solute
    *D* diffusivity of a solute in the carrier gas
    *f* volumetric flow rate of the carrier gas
    Both *D* and *f* are at column temperature, and at the same pressure.
As a reference, the gas chromatograph uses normal ambient pressure of 1 atm and normal temperature of 25 °C.
    $P_{norm}$ = 1 atm normal pressure
    $T_{norm}$ = 25°C normal temperature
    $D_{norm}$ diffusivity at $P_{norm}$ and $T_{norm}$
    $f_{norm}$ volumetric flow rate of carrier at $P_{norm}$ and $T_{norm}$
    The default values for $D_{norm}$ and $f_{norm}$ for Helium, Hydrogen and Nitrogen are set forth above in section 1.
DEFAULT COLUMN FLOW.

The temperature dependence of the volumetric flow rate may be determined from the ideal gas laws:

$$f = \frac{T}{T_{norm}} f_{norm}$$

The temperature dependence of $D$ may be calculated based on the fact that for a solute in a given gas medium, $D$ is roughly proportional 1.7-th power of $T$ and by making the assumption that there is a constant capacity factor for different temperatures rather than dealing with a fixed solute. Under these conditions, temperature dependence of $D$ is much weaker. Thus, $D$ can be expressed via the following empirical equation:

$$f = \left(\frac{T}{T_{norm}}\right)^{b} f_{norm}$$

where

$b \approx 0.5$. In that case, assuming

$a = 1-b = 0.5$,

then:

$$w = \frac{1}{u}\sqrt{L\left((\pi d_{c}(1+k))^{2}\left(\frac{T_{norm}}{T}\right)^{a}\frac{D_{norm}}{f_{norm}}+\frac{1+6k+11k^{2}}{12}\left(\frac{T}{T_{norm}}\right)^{a}\frac{f_{norm}}{D_{norm}}\right)}.$$

Although the smallest peak width (the highest date rate) takes place at the beginning of the run when $k = 0$, the initial peak width for the calculation of the date rate as a peak width is defined as:

$$k = 0.5.$$

The initial peak width, $w_{init}$, becomes:

$$w_{init} = \frac{3}{2u}\sqrt{L\left((\pi d_{c})^{2}\left(\frac{T_{norm}}{T}\right)^{a}\frac{D_{norm}}{f_{norm}}+\frac{1}{4}\left(\frac{T}{T_{norm}}\right)^{a}\frac{f_{norm}}{D_{norm}}\right)}$$

EXAMPLE. Column: 30m × 530μ, carrier gas: Hydrogen, column temperature: 200 °C.
Flow parameters (available from other parts of the system):

$$f_{norm} = 5.3 \text{ ml/min}$$

$$u \approx 40 \text{ cm/s} = 2400 \text{ cm/min}$$

$$D_{norm} = 5/(6\pi)\text{cm}^2/\text{s} = 50/\pi \text{ cm}^2/\text{min}$$

$$w_{init} \approx \frac{3}{2 \cdot 2400}\sqrt{3000\left((\pi \cdot 0.053)^{2}\left(\frac{273}{473}\right)^{0.5}\frac{50}{\pi 5.3}+\frac{1}{4}\left(\frac{473}{273}\right)^{0.5}\frac{5.3\pi}{50}\right)} \approx 0.014 \text{ min}$$

Since the *nearest* gas chromatograph peak width not exceeding this value is .01 minute, the derived setpoint data rate will be 20 Hz.

B. Sample Preparation Instrument

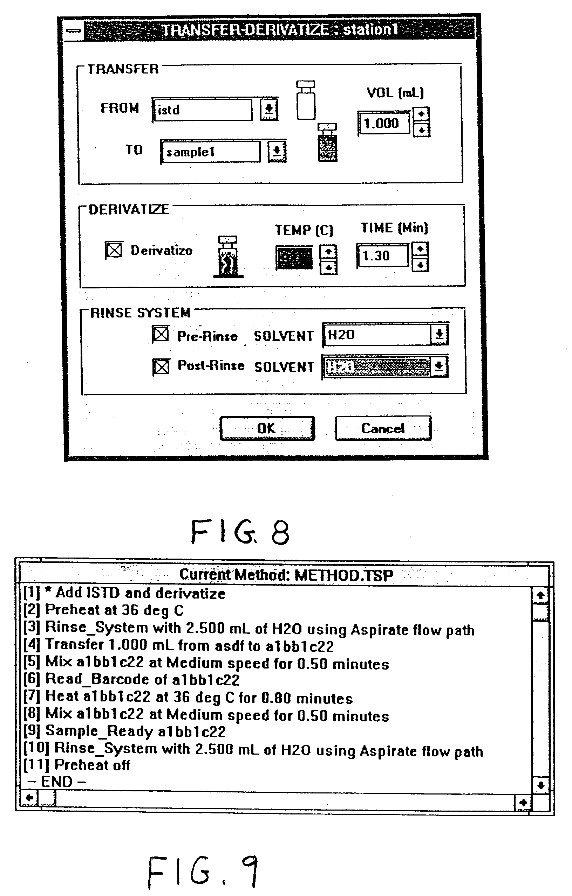

FIG. 8 illustrates an alternative embodiment of the invention employed as the user interface to a sample preparation instrument 800 which operates in accordance with a sample preparation Method. The sample preparation instrument 800 is coupled to a personal computer 810 which executes software application program 820 to control instrument 800 to run in accordance with the derived Method.

The application program 820 includes a plurality of derived equations representing the operation of the sample preparation instrument, a plurality of predetermined setpoint values and a plurality of Method setpoint screen displays. In particular, FIG. 9 is a screen display illustrating the Transfer-Deriviatize function employed for inputting user-determined setpoint values such as volume (VOL(ml)) and temperature (TEMP(C)) into the application program. For example, a user input of the Method variable "Pre-Rinse" result in the generation of the corresponding setpoint values. In particular, the computer will either calculate a setpoint value based on the input of a non-specific Method variable, or employ a look-up table to determine the corresponding setpoint value. FIG. 10 illustrates a final screen display illustrating the derived Method including predetermined setpoint values, setpoint values input by the user and generated setpoint values.

Any type of instrument which operates in according to a Method may advantageously employ this invention to make it easier or users to set up and operate the instrument in accordance with a standard Method. Additionally, the invention makes it easy to modify an existing Method.

Examples of analytical instruments which may utilize the invention include both a standalone and a PC controlled gas chromatograph and a PC controlled sample preparation apparatus. These instruments are employed for performing a wide variety of standard analytical Methods.

## Claims

1. A user interface for an instrument operating in accordance with a derived Method which provides for predetermined setpoint values, setpoint values input by the user and generated setpoint values based on Method variables input by the user, comprising:
a software application program (431; 531) comprising derived equations related to instrument operation and predetermined setpoint values, and means (425; 422) for inputting user inputs of setpoint values and method variables, and
a computer (426, 428; 526, 528) for storing the software application program and for generating setpoint values based on the derived equations and the setpoint values and the Method variables input by the user; and
a final screen display (425; 424) for illustrating the derived Method including the predetermined setpoint values, setpoint values input by the user and derived setpoint values; wherein, the instrument operates in accordance with the derived Method upon execution of the software application program (431; 531).

2. The user interface as claimed in claim 1, the software application program means for inputting data further comprising a plurality of setpoint screen displays for requesting the input of the setpoint values and the Method variables.

3. The user interface as claimed in claim 2, wherein the computer generates setpoint values by searching a look-up table based on the input of setpoint values and Method variables by the user.

4. The user interface as claimed in one of the claims 1 to 3, wherein the instrument is a gas chromatograph (410) or a sample preparation instrument.

5. A process for deriving a software application program (431; 531) to control an instrument (410) to operate in accordance with a Method is based on predetermined setpoint values, setpoint values and method variables input by the user and generated setpoint values based on inputs by the user, comprising:
formulating a plurality of equations representative of instrument operation,
simplifying the plurality of equations by making assumptions regarding instrument operation and inputting them into the software application program (431; 531),
storing the software application program (431; 531), including predetermined setpoint values,
displaying a plurality of setpoint screen displays which request the input of setpoint values and the input of Method variables;
inputting the setpoint values and the Method variables, generating setpoint values based on the setpoint values and Method variables input by the user,
displaying a final screen display illustrating the derived Method including the predetermined setpoint values, setpoint values input by the user and generated setpoint values; and
executing the application program (431; 531) on a computer (426, 428; 526, 528) to control the instrument (410) in accordance with the derived Method.

6. The process for building a software application program claimed in claim 5, the step of storing a software application program (431; 531) further comprising the step of storing a plurality of software application programs each of which are related to a specific task performed by the instrument (410).

7. The process for building a software application program claimed in claim 6, the step of displaying a plurality of setpoint screen displays further comprises the step of identifying the screen displays as a menu item on first screen display.

8. A process for controlling a gas chromatograph (410) to perform a chromatographic separation in accordance with a derived Method based on predetermined setpoint values, column parameters and instrument setup variables input by the user and generated setpoint values based on input by the user, comprising:

   identifying predetermined setpoint values based on assumptions relating to a known analytical Method,

   generating derived setpoint value equations by simplifying known chromatographic equations and inserting the predetermined setpoint values, wherein, the only variables in the setpoint value equations are column parameters and instrument setup variables,

   storing an application program (431; 531), including said derived setpoint value equations, on a computer (426, 428; 526, 528) coupled to said gas chromatograph (410),

   displaying setup screens to prompt the user to input column parameters and instrument setup variables,

   automatically inserting the column parameters and instrument setup variables into the derived setpoint value equations, wherein, the computer generates derived setpoint values,

   displaying a final screen display which illustrates the derived Method including predetermined setpoint values and derived setpoint values, and

   executing the application program (431; 531) on a computer (426, 428; 526, 528) to control the gas chromatograph (410) to perform a chromatographic separation in accordance with the derived Method.

9. The process for creating a software application program (431; 531) for controlling a gas chromatograph (410) as claimed in claim 8, wherein the column parameters and instrument setup variables further comprise Inlet/Detector setup variables, Injector setup variables, Column parameter variables and Temperature variables.

10. The process for creating a software application program (431; 531) for controlling a gas chromatograph (410) as claimed in claim 8, said step of inserting instrument setup variables occurs automatically upon user configuration of the gas chromatograph (410).

FIG 1

PRIOR ART

```
          ┌─────────────────────────────────┐
          │  User Enters Bench Method Name   │──── 40
          └─────────────────────────────────┘
                          │
          ┌─────────────────────────────────┐
          │ New Bench Method Created in Data Base │── 42
          └─────────────────────────────────┘
                          │
          ┌─────────────────────────────────┐
     ┌───▶│      User Selects Instrument     │──── 44
     │    └─────────────────────────────────┘
     │                    │
     │    ┌─────────────────────────────────┐
     │    │ Bench Supervisor Requests Instrument │── 46
     │    │      Methods from Instrument     │
     │    └─────────────────────────────────┘
     │                    │
     │    ┌─────────────────────────────────┐
     │    │   User Selects Instrument Method │──── 48
     │    └─────────────────────────────────┘
     │                    │
     │    ┌─────────────────────────────────┐
     │    │ Bench Supervisor Requests I/O List │── 50
     │    │ and Implicit Step List from Instrument │
     │    └─────────────────────────────────┘
     │                    │
     │                  ◇ 52
     │   No           ╱ All ╲
     └──────────────╱  Steps  ╲
                    ╲ Entered? ╱
                     ╲       ╱
                        │ Yes
          ┌─────────────────────────────────┐
          │    Resolve Unambiguous          │──── 54
          │    Inputs and Outputs           │
          └─────────────────────────────────┘
                          │
                        ◇ 56
                     ╱ All Inputs ╲      No   ┌─────────────────────┐
                    ╱  and Outputs  ╲────────▶│  User Specifies     │
                    ╲   Resolved?   ╱         │ Undefined Resolutions │
                     ╲             ╱          └─────────────────────┘
                        │ Yes                          │    58
                        │                              │
                        │◀─────────────────────────────┘
                        │
          ┌─────────────────────────────────┐
          │   User Enters Inputs             │──── 60
          │   Resolved to Bench Method       │
          └─────────────────────────────────┘
```

FIG 2     PRIOR ART

```
                    ( START )
  ┌─────────────────────────────────────────┐
  │ FORMULATE  A  PLURALITY  OF  FUNDAMENTAL │
  │ EQUATIONS  REPRESENTING  INSTRUMENT      │
  │           OPERATION                      │
  └─────────────────────────────────────────┘
  ┌─────────────────────────────────────────┐
  │ MAKE ASSUMPTIONS REGARDING INSTRUMENT    │
  │ OPERATION TO DERIVE SIMPIFIED EQUATIONS AND│
  │ TO IDENTIFY PRE-DETERMINED SETPOINT VALUES│
  └─────────────────────────────────────────┘
  ┌─────────────────────────────────────────┐
  │ STORE DERIVED EQUATIONS AND PRE-         │
  │ DETERMINED SETPOINT VALUES IN AN         │
  │ APPLICATION PROGRAM WHICH WHEN           │
  │ EXECUTED CONTROLS INSTRUMENT             │
  └─────────────────────────────────────────┘
```

DOES USER INTERFACE            NO          ┌──────────────────────┐
EMPLOY SETPOINT SCREEN                     │ USER INPUTS SETPOINT │
DISPLAYS TO OBTAIN USER                    │ VALUES AND METHOD    │
INPUTS (SETPOINT VALUES                    │ VARIABLES DIRECTLY   │
AND METHOD VARIABLES)?                     │ INTO APPLICATION     │
                                           │      PROGRAM         │
                                           └──────────────────────┘

YES

```
  ┌─────────────────────────┐
  │ DISPLAY  SETPOINT        │
  │ SCREEN DISPLAYS TO       │
  │ OBTAIN USER INPUTS       │
  └─────────────────────────┘
  ┌─────────────────────────────────────────┐
  │ GENERATE SETPOINT VALUES                 │
  │ BASED ON USER INPUTS (i.e.               │
  │ INSERT INPUTS INTO EQUATIONS,            │
  │ OR USE LOOKUP TABLES)                    │
  └─────────────────────────────────────────┘
  ┌─────────────────────────────────────────┐
  │ DISPLAY A FINAL SCREEN ILLUSTRATING      │
  │ DERIVED METHOD INCLUDING; PREDETERMINED  │
  │ SETPOINT VALUES, SETPOINT VALUES INPUT   │
  │ BY USER AND GENERATED SETPOINT VALUES    │
  └─────────────────────────────────────────┘
  ┌─────────────────────────────────────────┐
  │ EXECUTE APPLICATION PROGRAM TO           │
  │ CONTROL INSTRUMENT TO RUN IN             │
  │ ACCORDANCE WITH THE DERIVED METHOD       │
  └─────────────────────────────────────────┘
                  ( STOP )
```

# FIG. 3

FIG.4

EP 0 709 756 A1

FIG. 5

EP 0 709 756 A1

## Inlet/Detector

The QuickSet method created will make a single injection using the inlet and detector that you specify, which should be connected by Column 1.

Inlet:
- ⦿ Front(S/SL)     ○ Back(S/SL)
- ⦿ Split           ○ Splitless
- ⦿ Pulsed          ○ Unpulsed

Detector: ⦿ Front(NPD)    ○ Back(FPD)

| Cancel | < Back | Next > | Finish |

FIG. 6A

## Injector

The QuickSet method created will make a 1 microliter injection from the vial in tray position 1. The following information about the injector is needed.

Syringe size: 5  microliters

Nanoliter adapter installed:  ⦿ Yes    ○ No

| Cancel | < Back | Next > | Finish |

FIG. 6B

FIG. 6C

FIG. 6D

EP 0 709 756 A1

**Warning!**

(!) Using QuickSet will cause the current method to be overwritten. Continue?

[ OK ]  [ Cancel ]

---

**Instrument | Edit Method | QuickSet: [6090]**

■ Oven Temp

[plot: Temperature (°C) 400, 300, 200, 100, 0 vs Time (min) 0, 2, 4, 6, 8, 10, 12, 14]

[ Plot... ]

Injector  Valves  Inlets  Columns  Oven  Detectors  Signals  Aux  Runtime  Options

**Edit Method**
Ul:back
Acq:DL_10

[ OK ]

[ Cancel ]

[ Help ]

**Inlet and Detector**
Inlet: [____] 
Mode: [Split]
Detector: [Front]
Split Ratio:  50.0:1

**Sample Solvent**
Solvent: [Isooctane]
Boiling Pt.:  99 °C

**Signal 1**
Data Rate:  200 Hz
Peak Width:  0.001 min

**Column 1**

| Length | Diameter | Film Thickness | Max Temp. |
|--------|----------|----------------|-----------|
| 30.0 m | 310 µm | 5.00 µm | 200 °C |

Pressure:  6.6 psi          Carrier Gas: H2
Total Flow:  105 mL/min

**Injector**
Syringe size: [5] µL          Injection volume: 1µL
                              Tray position: 1
[X] Nanoliter adapter installed

| Oven Ramp | °C/min | Next °C | Hold min | Total min |
|-----------|--------|---------|----------|-----------|
| Initial | | 69 | 2.00 | 2.00 |
| Ramp 1 | 9.00 | 165 | 5.00 | 17.67 |

**FIG. 7**

18

## TRANSFER-DERIVATIZE : station1

**TRANSFER**

FROM `istd`  TO `sample1`

VOL (mL) `1.000`

**DERIVATIZE**

☒ Derivatize    TEMP (C)    TIME (Min) `1.30`

**RINSE SYSTEM**

☒ Pre-Rinse  SOLVENT `H2O`

☒ Post-Rinse  SOLVENT `H2O`

OK    Cancel

## FIG. 8

**Current Method: METHOD.TSP**

[1] * Add ISTD and derivatize
[2] Preheat at 36 deg C
[3] Rinse_System with 2.500 mL of H2O using Aspirate flow path
[4] Transfer 1.000 mL from asdf to a1bb1c22
[5] Mix a1bb1c22 at Medium speed for 0.50 minutes
[6] Read_Barcode of a1bb1c22
[7] Heat a1bb1c22 at 36 deg C for 0.80 minutes
[8] Mix a1bb1c22 at Medium speed for 0.50 minutes
[9] Sample_Ready a1bb1c22
[10] Rinse_System with 2.500 mL of H2O using Aspirate flow path
[11] Preheat off
— END —

## FIG. 9

## EUROPEAN SEARCH REPORT

European Patent Office

| Application Number |
| --- |
| EP 95 11 6977 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| X | PROCEEDINGS OF THE INDUSTRIAL COMPUTING CONFERENCE, ANAHEIM, OCT. 27 - 31, 1991, vol. 1, 27 October 1991 INDUSTRIAL COMPUTING SOCIETY, pages 387-400, XP 000344823 MACLAY W 'A GRAPHICAL PROGRAMMING ENVIRONMENT FOR DATA ACQUISITION AND PROCESS CONTROL' | 1-3,5-7 | G05B19/042 |
| Y | * the whole document * | 4,8,9 | |
| A | | 10 | |
| | --- | | |
| Y | DATABASE INSPEC INSTITUTE OF ELECTRICAL ENGINEERS, STEVENAGE, GB Inspec No. 1565060, VILLALOBOS R. 'Calibration and data reduction in microprocessor based process chromatographs' * abstract * & TRANS. INST. MEAS. CONTROL (UK), TRANSACTIONS OF THE INSTITUTE OF MEASUREMENT AND CONTROL , October 1979 - December 1979 UK, | 4,8,9 | |
| | --- | | **TECHNICAL FIELDS SEARCHED (Int.Cl.6)** G05B |
| A | PROCEEDINGS OF THE AFRICON CONFERENCE, EZULWINI VALLEY, SWAZILAND, SEPT. 22 - 24, 1992, no. -, 22 September 1992 INSTITUTE OF ELECTRICAL AND ELECTRONICS ENGINEERS, pages 99-102, XP 000420226 WEBSTER M R ET AL 'AUTOMATING CONTROL CODE GENERATION' * the whole document * | 1-10 | |
| | ----- | | |

The present search report has been drawn up for all claims

| Place of search | Date of completion of the search | Examiner |
| --- | --- | --- |
| THE HAGUE | 26 February 1996 | Nettesheim, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)